**Europäisches Patentamt**

**European Patent Office**

**Office européen des brevets**

(11) Numéro de publication : **0 498 749 A1**

## (12) DEMANDE DE BREVET EUROPEEN

(21) Numéro de dépôt : **92440016.1**

(22) Date de dépôt : **07.02.92**

(51) Int. Cl.$^5$ : **F24H 1/32**

(30) Priorité : **07.02.91 FR 9101572**

(43) Date de publication de la demande :
**12.08.92 Bulletin 92/33**

(84) Etats contractants désignés :
**DE GB IT NL**

(71) Demandeur : **DE DIETRICH THERMIQUE**
**2 rue Clémenceau**
**F-67110 Niederbronn-les-Bains (FR)**

(72) Inventeur : **Fuhlhaber, Michel**
**5 rue des Eglantiers**
**F-67110 Reichshoffen (FR)**
Inventeur : **Weitz, Philippe**
**10 rue des Primevères**
**F-67110 Reichshoffen (FR)**
Inventeur : **Paradis, Marcel**
**1 rue Osterhardt**
**F-67580 Mertzwiller (FR)**

(74) Mandataire : **Metz, Paul**
**Cabinet METZ PATNI 63, rue de la Ganzau**
**F-67100 Strasbourg (FR)**

(54) Elément échangeur de chaleur pour chaudière sectionnable en fonte.

(57)    Elément échangeur de chaleur en fonte pour chaudière sectionnable, caractérisé en ce qu'il présente deux positions inverses d'utilisation par une conformation à rampe transversale inclinée (16) de fond bordée par une paroi latérale sèche (21) et une paroi latérale mouillée (28) formant ensemble une chambre de combustion (18) obturée par une plaque-support amovible de brûleur.

Cette invention intéresse les fabricants de chaudières en fonte.

FIG. 1

EP 0 498 749 A1

La présente invention se rapporte à un échangeur de chaleur pour chaudière sectionnable en fonte.

Les éléments échangeurs de chaudière sectionnable en fonte présentent un volume intérieur creux dans lequel circule le fluide caloporteur, en général de l'eau.

Ils présentent sur leurs deux faces externes s'il s'agit d'éléments intermédiaires ou sur une seule de leurs faces s'il s'agit d'éléments de façade des structures saillantes conformées dans la masse sous la forme par exemple de picots. Ces structures favorisent l'échange des calories entre les gaz et fumées de combustion provenant d'un brûleur et le fluide caloporteur circulant à l'intérieur des éléments échangeurs.

Ceux-ci sont juxtaposés et assemblés mécaniquement par des tirants pour constituer la totalité du corps de chauffe d'une chaudière.

Les faces externes forment entre elles des volumes d'échange occupés partiellement par les picots et parcourus d'une extrémité à l'autre par les gaz et fumées à haute température provenant de la flamme du brûleur.

Les éléments échangeurs de ce type sont réalisés en fonte par moulage. En raison des corps creux contenant le volume d'eau, la technique employée est celle du moulage à noyau perdu.

Selon cette technique, un conformateur appelé "boîte à noyaux" réalise la masse de matière qui sera utilisée pour occuper temporairement, le temps du coulage, le volume du corps creux. Cette matière est en général du sable réfractaire.

Pour donner une tenue et une consistance à ce sable, on le mélange à une matière polymérisable.

La polymérisation doit s'effectuer à coeur. On a choisi l'emploi d'un gaz comme agent de polymérisation.

Ainsi, le conformateur doit comporter tout un réseau de conduits sous forme d'aiguilles destinées à injecter le gaz de polymérisation au coeur de la matière et à l'évacuer.

Par ailleurs, le sable est apporté par aspiration dans le conformateur. Pour cette raison, de nombreuses bouches reliées à un générateur à dépression s'avèrent nécessaires.

Cette complexité confère à cet outillage un caractère onéreux. Il convient donc de le rentabiliser au maximum, surtout lorsqu'il s'agit d'une production en grande série. Ainsi, pour les besoins de l'industrie on réalise des conformateurs à plusieurs empreintes.

En raison du coût particulièrement élevé de réalisation de cette boîte à noyaux, il s'avère intéressant de pouvoir la mettre en oeuvre pour différents modèles de chaudière.

La présente invention vise ce but ainsi que la réalisation d'un générateur performant sans entretien dans lequel la formation des boues et du tartre se montre fortement réduite.

Les caractéristiques techniques et d'autres avantages de l'invention sont consignés dans la description qui suit, effectuée à titre d'exemple non limitatif sur un mode d'exécution en référence aux dessins accompagnants dans lesquels :

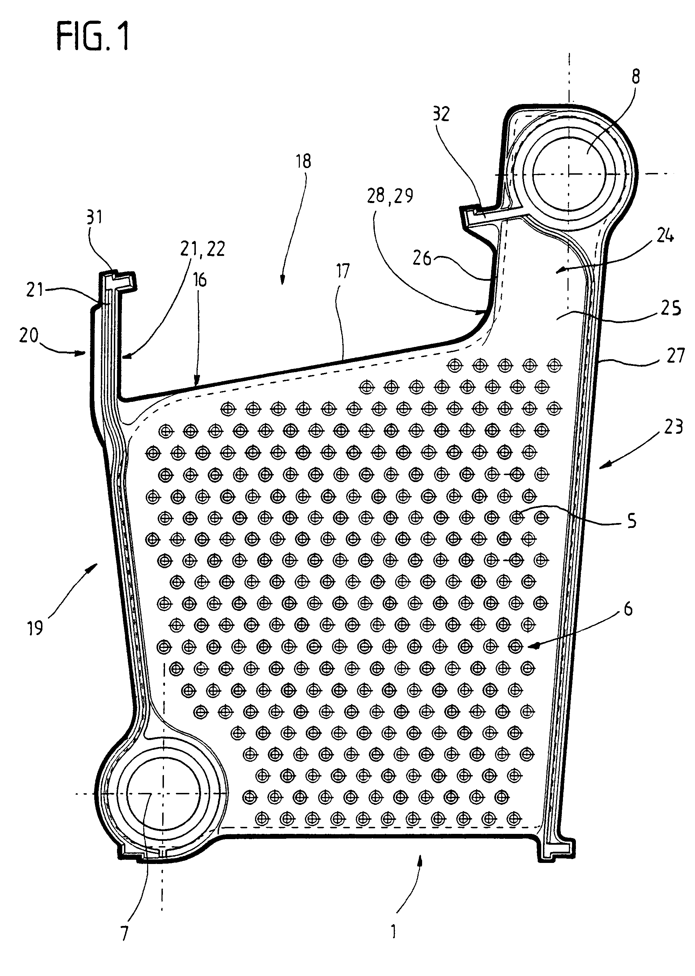

. la figure 1 est une vue en élévation d'un élément échangeur intermédiaire en position d'utilisation dite brûleur-haut ;

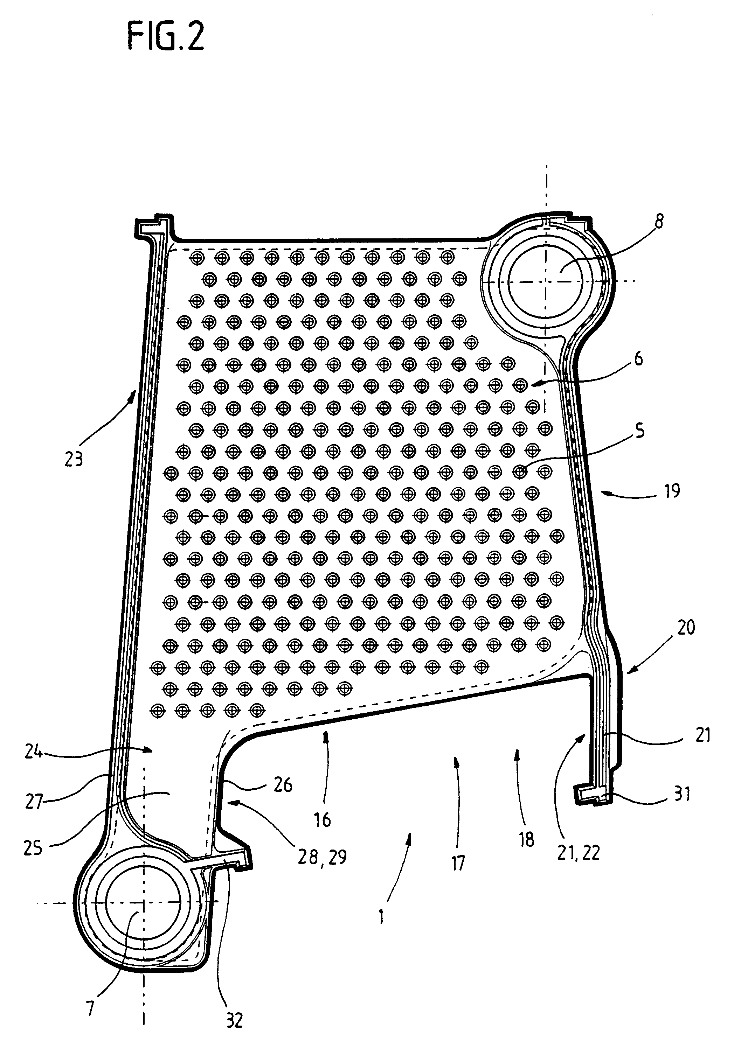

. la figure 2 est une vue en élévation du même élément échangeur en position d'utilisation brûleur-bas ;

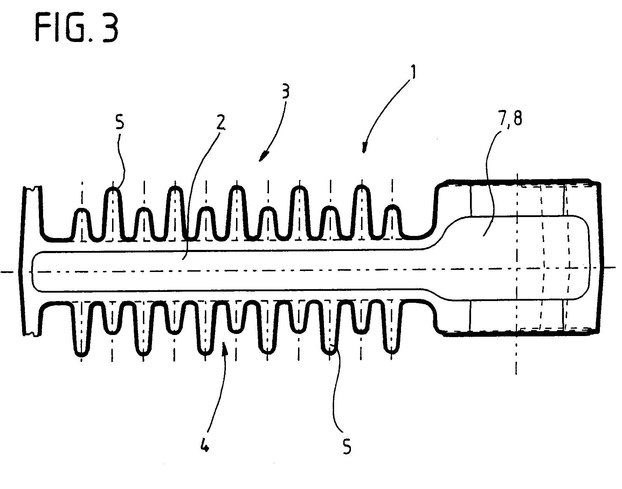

. la figure 3 est une vue en coupe transversale passant par une connexion d'un élément intermédiaire ;

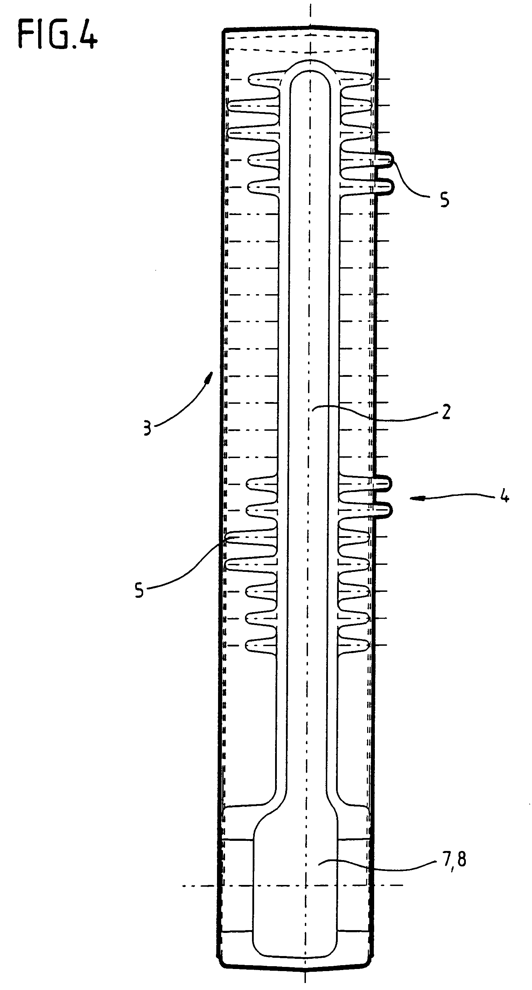

. la figure 4 est une coupe longitudinale passant par une connexion d'un élément intermédiaire ;

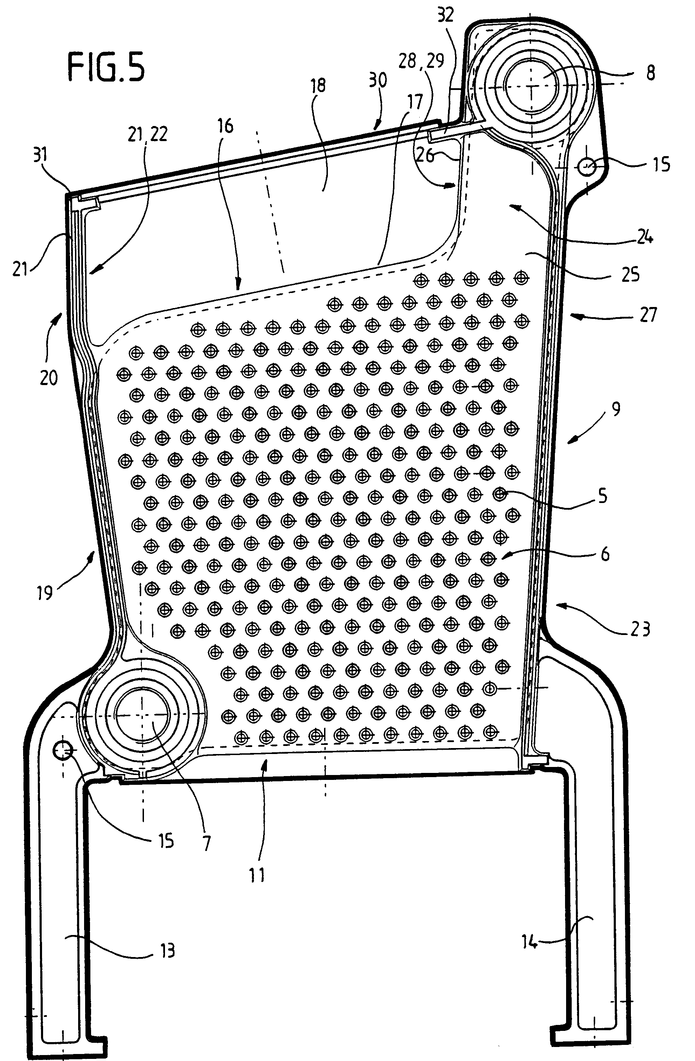

. la figure 5 est une vue en élévation de la face interne d'un élément d'extrémité arrière en position brûleur-haut ;

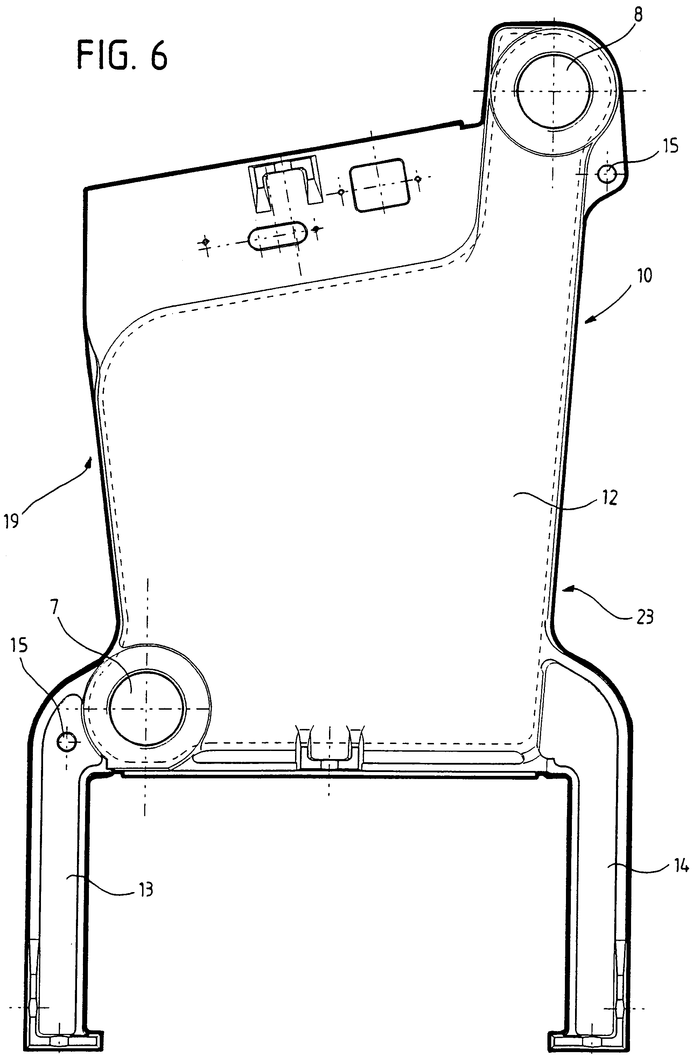

. la figure 6 est une vue en élévation de la face externe d'un élément d'extrémité avant en position brûleur-haut.

L'idée générale inventive consiste à concevoir un élément échangeur entièrement nouveau utilisable pour réaliser aussi bien des chaudières à brûleur-haut que des chaudières en fonte à brûleur-bas.

La forme de cet élément échangeur est étudiée pour s'adapter, dans chaque cas d'utilisation, aux particularités d'échange de chaleur et de circulation des fluides caloporteurs et de combustion.

Une caractéristique originale de cet échangeur réside dans la conformation inclinée d'un des bords de la surface d'échange constituant une partie élémentaire du fond de la chambre de combustion, cette conformation ayant plusieurs fonctions comme il sera détaillé ci-après.

Une autre originalité concerne la prolongation de l'extrémité de l'échangeur au niveau de la chambre de combustion. Cette extrémité se rétrécit sur une certaine longueur pour former une extension constituant un passage par lequel arrive, dans la position d'utilisation brûleur-bas, le fluide caloporteur froid du circuit retour.

On notera, dans les deux types d'utilisation, le rôle essentiel de la forme originale de l'élément échangeur dans l'amélioration de la circulation de l'eau chauffée donc dans la possibilité d'obtenir plus de puissance avec un même élément. Cette particularité fonctionnelle s'ajoute à l'intérêt économique de fabrication expliqué en partie introductive et à la maintenance réduite provenant de la réduction importante du dépôt de boues et de formation de tartre. Ces caractéristiques font de cet élément échangeur original pour chaudière en fonte un produit fonctionnellement et économiquement intéressant.

Cet intérêt se traduit par la possibilité de construire divers modèles et des types différents de chaudières à partir d'un même noyau de fonderie selon la technique du moulage dit à noyau perdu.

On se reportera d'abord, pour la description de détail, aux figures 1 à 4 qui montrent le même élément intermédiaire dans ses deux positions d'utilisation respectivement brûleur-haut, puis brûleur-bas et en coupe horizontale et verticale.

Les éléments échangeurs dits intermédiaires 1 comportent de façon connue un volume intérieur creux 2 dans lequel circule le fluide caloporteur, généralement de l'eau et deux faces latérales externes 3 et 4 présentant des picots tels que 5 ou ailettes d'échange de chaleur, répartis régulièrement sur une zone 6 occupant presque la totalité de la surface et qui seront en contact avec les gaz chauds provenant de la chambre de combustion.

On prévoit généralement classiquement deux passages d'eau, cylindriques appelés connexions l'une d'entrée d'eau froide 7 et l'autre de sortie d'eau chaude 8 d'axe horizontal perpendiculaire au plan de l'élément échangeur pour l'arrivée de l'eau froide de retour et la sortie de l'eau chaude de départ.

Les éléments échangeurs d'extrémité arrière 9 et avant 10 (figures 5 et 6) comportent une seule face latérale interne telle que 11 pourvue de picots 5 semblables à deux des faces latérales des éléments intermédiaires. La face externe telle que 12 est lisse et pourvue généralement d'accessoires techniques. Les éléments échangeurs d'extrémité possèdent encore des pieds tels que 13 et 14 et des trous d'assemblage tels que 15 pour le passage des tirants assemblant et maintenant juxtaposés entre eux tous les éléments échangeurs constitutifs du corps de chauffe de la chaudière.

Le nombre total et les dimensions des éléments intermédiaires composant le corps de chauffe est fonction de la puissance souhaitée de la chaudière.

On se reportera à présent à la figure 1.

La forme générale de l'échangeur selon l'invention ne reprend pas une forme habituelle rectangulaire. Elle est dans son ensemble sensiblement trapézoïdale, s'évasant légèrement vers le haut et présentant un bord haut incliné 16, constituant une partie élémentaire du fond incliné 17 d'une chambre de combustion 18 formée par la juxtaposition des éléments échangeurs.

Le bord latéral gauche 19 s'étend, légèrement incliné vers l'extérieur par rapport à la verticale, depuis le passage inférieur distributeur d'eau froide 7 ou connexion inférieure jusqu'à une rampe élémentaire inclinée constituée par le bord haut incliné 16 et se prolonge vers le haut par une extension latérale 20 sensiblement verticale, constituant une partie élémentaire 21 d'une des parois latérale 22 de la chambre de combustion 18.

Cette paroi latérale 22 sera qualifiée de sèche car ne renfermant pas d'eau.

Le bord latéral droit 23 s'étend, légèrement incliné vers l'extérieur par rapport à la verticale depuis l'angle inférieur droit de l'élément jusqu'au passage collecteur d'eau chaude appelé connexion d'eau chaude 8.

La zone 6 de picots occupe la partie centrale de chaque face externe d'élément échangeur. Elle présente à l'une de ses extrémités en-deçà de la connexion 7 ou 8 selon la position d'utilisation une extension longitudinale 24 formant un passage en canal 25 d'eau en mouvement vers ou à partir de ladite connexion. Ce canal 25 délimité par des cloisons adjacentes 26 et 27 en fonte de l'échangeur constitue une paroi latérale élémentaire 28 dite mouillée disposée en regard de la paroi latérale élémentaire sèche 21.

La juxtaposition des parois latérales élémentaires 28 formera une paroi latérale mouillée 29 de la chambre de combustion 18.

Comme déjà indiqué, l'échangeur présente le long d'un côté de la zone 6 de picots la rampe élémentaire inclinée 16 reliant les bases des deux parois latérales élémentaires 21 et 28.

La rampe élémentaire 16 est inclinée du bas vers le haut de la paroi élémentaire 21 vers la paroi élémentaire 28.

Une inclinaison de l'ordre de 10° d'angle environ par rapport à l'horizontale s'avère suffisante.

Les deux parois latérales élémentaires 21 et 28 forment, lorsque juxtaposées, les parois latérales 22 et 29 de la chambre de combustion 18. De même, les rampes élémentaires inclinées 16 constituent, lorsque juxtaposées, le fond incliné 17 de la chambre de combustion 18 qui sera obturée par une plaque amovible, par exemple une plaque-support 30 monobloc de brûleur.

A cet effet, on prévoit en haut de l'échangeur, ( figures 5 et 6 ) deux éléments de bordure gauche 31 et droit 32 destinés à recevoir à fixation la plaque-support 30 de brûleur sur toute la longueur du corps de chauffe de la chaudière. L'élément de bordure droit 32 est placé plus haut que l'élément de bordure gauche 31 de façon que la pente de la plaque-support de brûleur soit sensiblement la même que la pente du fond 17 de la chambre de combustion 18.

Dans cette position d'utilisation, le brûleur sera fixé sur la plaque-support 30 de brûleur et la flamme dirigée vers le bas et vers le fond 17 de la chambre de combustion 18 qui est, conformément à l'invention, incliné pour favoriser et accélérer le mouvement ascendant de l'eau chauffée vers le passage collecteur ou connexion de sortie d'eau chaude 8.

La combinaison d'une part de l'éloignement de la flamme du brûleur par rapport au fond de la chambre de combustion et d'autre part le caractère incliné de celui-ci permet d'éviter le risque de surchauffe et d'ébullition de l'eau déjà notablement chauffée lorsqu'elle atteint la zone située sous la chambre de combustion. En effet, ce risque se montre habituellement important dans les modèles de chaudières à brûleur haut.

On se reportera à présent à la figure 2.

L'élément échangeur représenté est absolument identique au précédent mais en position inversée dite "brûleur-bas". Dans cette position, la connexion proche de la chambre de combustion en position basse devient une entrée d'eau froide 7, l'autre passage d'eau devenant une sortie d'eau chaude 8. Le mouvement de l'eau à l'intérieur de l'élément échangeur est toujours ascendant.

Dans cette position, l'élément échangeur est plus étroit en haut qu'en bas, favorisant ainsi la collecte de l'eau chaude vers le passage supérieur d'eau chaude ou connexion chaude 8.

De plus, cette configuration d'utilisation permet de disposer latéralement à la chambre de combustion par la succession des parois élémentaires 28 d'une paroi latérale longitudinale 29 dite "mouillée" c'est-à-dire contenant de l'eau en mouvement.

Cette caractéristique particulièrement recherchée permet d'améliorer notablement la propreté de la combustion, c'est-à-dire de diminuer fortement la teneur en oxyde d'azote des produits de combustion.

La pente de la rampe inclinée 16 constituant le bord inférieur de l'élément échangeur joue également dans ce cas un rôle technique. Elle favorise et accélère par sa forme divergente et hydrodynamique le mouvement ascendant d'évacuation de l'eau chauffée par le brûleur.

En particulier, si le bord inférieur de l'échangeur s'était étendu horizontalement à partir de son angle gauche, comme c'est le cas dans l'art antérieur, il existerait un volume de section sensiblement triangulaire, dans lequel les courants de fluides seraient faibles, favorisant le dépôt de boues et la formation de tartre. Cette pente a donc pour effet de diminuer ce volume quasi dormant et par conséquent de réduire notablement le dépôt des boues et l'entartrage qui en résulte.

Il est bien entendu qu'au-delà des moyens décrits, diverses modifications évidentes et variantes simples entrent dans le cadre de la présente invention.

**Revendications**

1. Elément échangeur de chaleur pour chaudière sectionnable en fonte présentant un volume intérieur creux dans lequel circule un fluide caloporteur entre une connexion (7) et (8), et au moins une de ses faces externes comprenant une zone (6) d'une pluralité de structures saillantes vers l'extérieur du type picots (5), venues de fonderie, et favorisant l'échange de chaleur entre le fluide caloporteur et les produits de combustion à haute température circulant dans le volume compris entre les deux faces latérales à picots de deux éléments consécutifs juxtaposés, et présentant deux bords latéraux et deux bords transversaux d'extrémité inférieur et supérieur, caractérisé en ce que l'un des bords transversaux d'extrémité inférieur ou supérieur est une rampe inclinée (16) par rapport à l'horizontale, et en ce que cette rampe se prolonge approximativement à angle droit à l'une de ses extrémités par une extension (24) renfermant un volume creux en canal (26) de passage de l'eau, formant une paroi élémentaire dite mouillée (28), constituée par la partie de l'échangeur située entre la limite de la zone à picots et la connexion adjacente (7) ou (8) et en ce que l'échangeur est utilisable debout dans un sens avec un brûleur haut et debout dans l'autre sens avec un brûleur bas.

2. Elément échangeur selon la revendication 1, caractérisé en ce que la rampe inclinée (16) présente une pente montante de gauche à droite dans la position de brûleur haut.

3. Elément échangeur selon la revendication 2, caractérisé en ce que la connexion d'eau (8) reliée au volume creux de l'élément échangeur par l'extension (24) bordée par la paroi élémentaire mouillée (28) constitue la sortie d'eau chauffée.

4. Elément échangeur selon la revendication 1, caractérisé en ce que la rampe inclinée (16) présente une pente montante de droite à gauche dans la position de brûleur bas.

5. Elément échangeur selon la revendication 4, caractérisé en ce que la connexion d'eau (7) reliée au volume creux de l'élément échangeur par l'extension (24) bordée par la paroi élémentaire mouillée (28) constitue l'entrée d'eau froide.

6. Elément échangeur selon l'une quelconque des revendications précédentes, caractérisé en ce que l'inclinaison de la rampe d'extrémité est sensiblement de 10° d'angle par rapport à l'horizontale dans le sens à favoriser la montée de l'eau vers la connexion de sortie.

7. Elément échangeur selon l'une quelconque des revendications précédentes, caractérisé en ce que les bords latéraux se terminent par des extensions qui portent des éléments de bordures (31) et (32) à des niveaux différents pour recevoir une plaque amovible, support de brûleur obturant la chambre de combustion.

FIG.1

# FIG.2

FIG. 3

FIG.4

FIG.5

FIG. 6

EP 0 498 749 A1

Office européen
des brevets

**RAPPORT DE RECHERCHE EUROPEENNE**

Numero de la demande

EP 92 44 0016

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 105 017 (FER-FABBRICA EUROPEA RISCALDIMENTO SPA)<br>* le document en entier *<br>--- | 1,2,4,6, 7 | F24H1/32 |
| X | DE-U-8 634 371 (FERROLI)<br><br>* figure 1 *<br><br>----- | 1,2,4,6, 7 | |
| | | | **DOMAINES TECHNIQUES RECHERCHES (Int. Cl.5)**<br><br>F24H |

Le présent rapport a été établi pour toutes les revendications

| Lieu de la recherche | Date d'achèvement de la recherche | Examinateur |
|---|---|---|
| LA HAYE | 22 AVRIL 1992 | VAN GESTEL H.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)

11